# EUROPEAN PATENT SPECIFICATION

(11) **EP 0 851 143 B1**
(45) Date of publication and mention of the grant of the patent: **18.08.2004**
(21) Application number: 97122383.9
(22) Date of filing: 18.12.1997
(51) Int. Cl.: F16F 1/38, B60G 25/00

(54) **Body mount**
Lager für ein Karosserie
Fixation pour carrosserie

(30) Priority: 27.12.1996 US 773825
(43) Date of publication of application: 01.07.1998
(73) Proprietor: BASF CORPORATION, Mount Olive, New Jersey 07828-1234 (US)
(72) Inventor: Huprikar, Anand G., Michigan 48101 (US)
(74) Representative: Abel, Manfred

(56) References cited:
- EP-A- 0 552 408
- FR-A- 1 599 597
- FR-A- 2 717 438
- GB-A- 628 668
- GB-A- 760 670
- GB-A- 1 132 954
- US-A- 2 286 582
- US-A- 3 884 455
- US-A- 4 002 327

## Description

The present invention relates to an improved body mount assembly for securing a vehicle body to a vehicle frame and absorbing and isolating vibrations or shocks between the two structures.

Shock absorbing body mounts are well known in the automotive industry for securing and supporting the body of a vehicle to its frame. A body mount joint must isolate the vibration from the frame to the body or vice versa. By isolate, it is meant that the magnitude of a vibrational force exerted by the frame through the joint upon the body will be reduced as a result of the passage of the vibrational force through the joint. At or near a static load, it is desirable to have a vibration dampening material which has a low critical frequency. Frequencies less than the critical frequency vibrations transfer easily through the isolating material. Thus, it is desirable to have a soft joint with a critical frequency as low as possible for static vibrational loads. However, it is desirable to have a very stiff joint for large translational loads/movements so that the body is not displaced from the chassis, i.e. the displacement or shear is reduced. Thus, the use of a soft material such as rubber for obtaining a low critical frequency for reducing static vibrations results in a joint which is not satisfactorily stiff for preventing displacement of the body from the chassis.

GB-A-628 668 discloses vehicle body mountings wherein resilient elements are interposed between the body and its support.

Most commonly, rubber, rings, or pads are utilized for isolating the vibrations of the vehicle frame from the vehicle body. Rubber generally has a satisfactory critical frequency to absorb vibrations in the vertical (Z) direction. The prior art body mounts have used shear stresses on the rubber for isolating the vibrational and translational forces in the axial (X) and transaxial (Y) directions. However, the reliance on the shear modulus of the rubber allows undesirable sway or swag of the vehicle body relative to the vehicle frame.

Accordingly, the present invention provides a body mount according to claims 1 and 19. The body mount of the present invention includes a retainer member attached to the vehicle frame and a second retainer member attached to the vehicle body. One or more microcellular polyurethane members are provided between the first and second retainer members and between the vehicle body and the vehicle frame for isolating and absorbing vibrational and translational forces between the structures. The microcellular polyurethane members have a low critical frequency as desired for absorbing vibrations and also have a higher stiffness under heavy loads than the traditional rubber material used in conventional body mounts. Therefore, the use of the microcellular polyurethane members provides the desired vibration isolating characteristic with the desired stiffness for transmitting translational forces without relatively large displacements of the body relative to the frame.

The use of a microcellular polyurethane member in an environment where the member is exposed to compression forces in both the vertical and lateral directions is particularly advantageous since microcellular polyurethane does not exhibit side swell under compression. Contrary to this, rubber suffers from the disadvantage that side swell occurs when the rubber is under compression. Because of the side swell exhibited by rubber material, rubber is not suitable for use where the material is exposed to both vertical and lateral compression forces.

Further areas of applicability of the present invention will become apparent from the detailed description provided hereinafter. It should be understood however that the detailed description and specific examples, while indicating preferred embodiments of the invention, are intended for purposes of illustration only, since various changes and modifications within the spirit and scope of the invention will become apparent to those skilled in the art from this detailed description.

The present invention will become more fully understood from the detailed description and the accompanying drawings, wherein:
Figure 1 is a cross-sectional view of a body mount design for use with microcellular polyurethane vibration isolating members;
Figure 2 is a cross-sectional view of a body mount design for utilizing microcellular polyurethane vibration isolating members
Figure 3 is a cross-sectional view of a body mount design for use with microcellular polyurethane vibration isolating members
Figure 4 is a cross-sectional view of a body mount design for use with microcellular polyurethane vibration isolating members. The embodiments shown in Figures 1 to 4 do not form part of the invention.
Figure 5 is a cross-sectional view of a microcellular polyurethane vibration isolating member disposed between inner and outer walls according to the present invention; and
Figure 6 is a stress-strain characteristic curve for microcellular polyurethane.

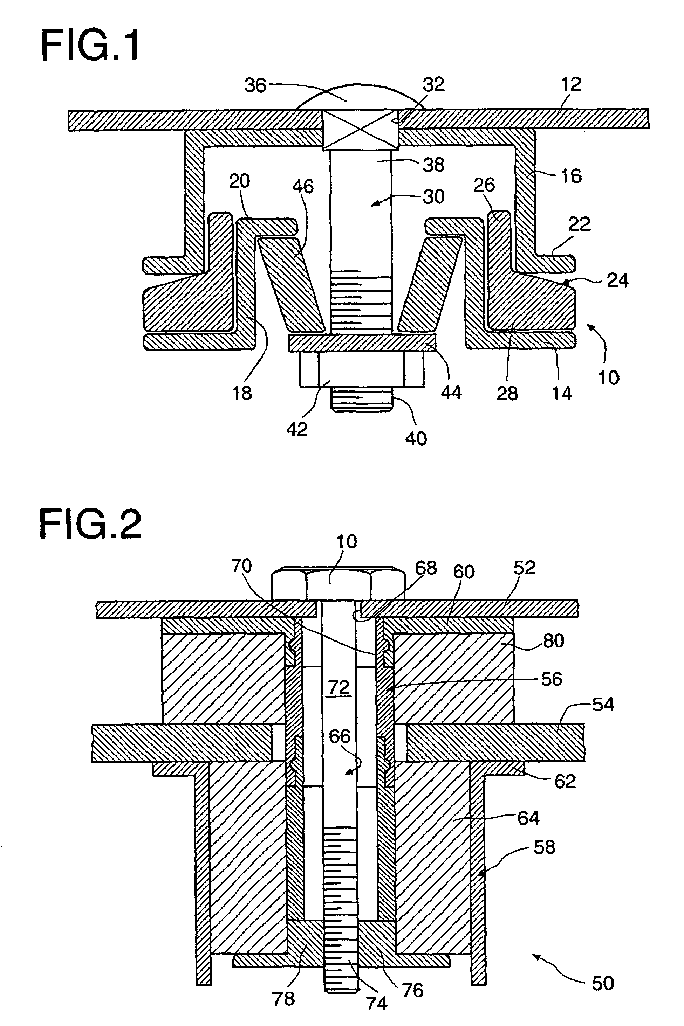

Figure 1 illustrates a body mount 10 for adjoining a vehicle body 12 to a vehicle frame 14. The body mount 10 includes a first generally cup-shaped retaining member 16 mounted to body 12. The retaining member 16 can be fastened to the body 12 by a variety of means including welding, rivets, bolts, and other equivalent fastening means. A second retaining member 18 is attached to frame 14. Retaining member 18 can be fastened to the frame 14 by fastening means such as bolts, welding, rivets, and other equivalent fastening means. As shown in Figure 1, the retaining member 18 is integrally formed with the frame 14.

Each of the retaining members 16, 18 are generally cylindrical in shape with the retaining member 18 having an outer diameter which is smaller than the inner diameter of retaining member 16. Retaining member 18 is at least partially inserted within retaining member 16. Retaining member 18 includes a radially inwardly extending flange 20 at an upper portion thereof. Retaining member 16 is provided with a radially outwardly extending flange 22 at a lower portion thereof. A microcellular polyurethane ring member 24 is disposed between the retaining members 16, 18. Ring member 24 includes a lateral cushion portion 26 disposed radially between the inner wall of outer retaining member 16 and the outer wall of inner retaining member 18. Ring member 24 also includes a vertical cushion portion 28 disposed vertically between the radially outwardly extending flange 22 of the outer retaining member 16 and frame 14. The lateral cushion portion 26 and vertical cushion portion 28 can be formed integrally as shown in Figure 1 or can be provided as separate independent pieces.

The body mount 10 includes a fastener bolt 30 received through an opening 32 provided in body 12 and outer retaining member 16. Bolt 30 includes a head portion 36 connected to a shaft portion 38 having a threaded end 40 for receiving a nut 42. A compression plate 44 is mounted on bolt 30. A second microcellular polyurethane member 46 is provided between compression plate 44 and radially inwardly extending flange 20 of the inner retaining member 18.

The lateral cushion portion 26 of first microcellular polyurethane ring member 24 is provided for transmitting axial and transaxial forces between frame 14 and body 12. Meanwhile, second microcellular polyurethane ring member 46 and vertical cushion portion 28 of first microcellular polyurethane ring member 24 absorb vibrational and translational forces in the vertical direction.

Figure 2 illustrates a body mount 50 for adjoining a vehicle body 52 to a vehicle frame 54. The body mount 50 includes a snap-together inner retaining member 56 mounted to body 52. The inner retaining member 56 can be fastened to the body 52 by a variety of means including welding, rivets, bolts, and other equivalent fastening means. An outer retaining member 58 is attached to frame 54. Outer retaining member 58 can be fastened to the frame 54 by fastening means such as bolts, welding, rivets, and other equivalent fastening means. As shown in Figure 2, the retaining member 58 is welded to the frame 54. Each of the retaining members 56, 58 are generally cylindrical having a circular cross section but could be oval or polygonal in shape with the inner retaining member 56 having an outer diameter which is smaller than the inner diameter of retaining member 58. Inner retaining member 56 is at least partially inserted within outer retaining member 58. Inner retaining member 56 includes a radially outwardly extending flange 60 at an upper portion thereof. Retaining member 58 is provided with a radially outwardly extending flange 62 at an upper portion thereof. The cross section of the retaining members is determined by the desired stiffness in the x and y directions.

A microcellular polyurethane ring member 64 is disposed between the retaining members 56, 58. Ring member 64 provides a lateral cushion between the inner wall of outer retaining member 58 and the outer wall of inner retaining member 56. Construction is such that the body mount forms a rigid body.

The body mount 50 includes a fastener bolt 66 received through an opening 68 provided in body 52 and an opening 70 in outer retaining member 56. Bolt 66 includes a head portion 70 connected to a shaft portion 72 having a threaded end 74 for receiving a compression plate 76 with a threaded nut 78. Ring member 64 is supported vertically between compression plate 76 and frame 54. A second microcellular polyurethane ring member 80 is provided between frame 54 and radially outwardly extending flange 60 of the inner retaining member 56.

The first microcellular polyurethane ring member 64 is provided for transmitting axial and transaxial forces between frame 54 and body 52. Meanwhile, the first and second microcellular polyurethane ring members 64, 80 absorb vibrational and translational forces in the vertical direction.

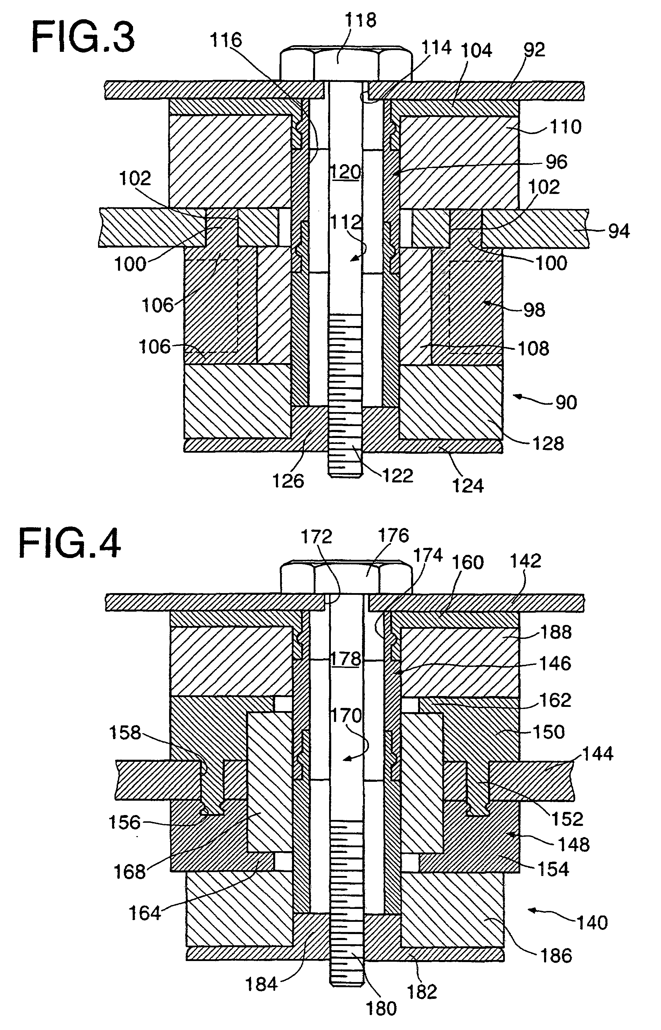

Figure 3 illustrates a body mount 90 for adjoining a vehicle body 92 to a vehicle frame 94. The body mont 90 includes a snap-together inner retaining member 96 mounted to body 92. The inner retaining member 96 can be fastened to the body 92 by a variety of means including welding, rivets, bolts, and other equivalent fastening means. An outer retaining member 98 is attached to frame 94. Outer retaining member 98 is fastened to the frame 94 by a plurality of posts 100 which are inserted in openings 102 provided in frame 94. Each of the retaining members 96, 98 are generally cylindrical in shape with the inner retaining member 96 having an outer diameter which is smaller than the inner diameter of retaining member 98. Inner retaining member 96 is at least partially inserted within retaining member 98. Inner retaining member 96 includes a radially outwardly extending flange 104 at an upper portion thereof.

Outer retaining member 98 is provided with a radially outwardly extending flange 106 at an upper and lower portion thereof. A first microcellular polyurethane ring member 108 is disposed between the retaining members 96, 98. Ring member 108 is disposed between the inner wall of outer retaining member 98 and the outer wall of inner retaining member 96. A second microcellular polyurethane ring member 110 is disposed between the radially outwardly extending flange 104 of the inner retaining member 96 and frame 94.

The body mount 90 includes a fastener bolt 112 received through an opening 114 provided in body 92 and through opening 116 in inner retaining member 96. Bolt 112 includes a head portion 118 connected to a shaft portion 120 having a threaded end 122 for receiving a compression plate 124 having an integral nut portion 126. A third microcellular polyurethane member 128 is provided between compression plate 124 and lower radially outwardly extending flange 106 of the outer retaining member 98.

The first microcellular polyurethane ring member 108 is provided for transmitting axial and transaxial forces between frame 94 and body 92. Meanwhile, second and third microcellular polyurethane ring members 100, 128 absorb vibrational and translational forces in the vertical direction.

Figure 4 illustrates a body mount 140 for adjoining a vehicle body 142 to a vehicle frame 144. The body mount 140 includes a snap-together inner retaining member 146 mounted to body 142. The inner retaining member 146 can be fastened to the body 142 by a variety of means including welding, rivets, bolts, and other equivalent fastening means. An outer retaining member 148 is attached to frame 144. Outer retaining member 148 includes an upper portion 150 having a plurality of posts 152 and a lower portion 154 having a plurality of recesses 156 which are snap fitted together by inserting the posts 152 through openings 158 in frame 144 and into recesses 156. Each of the retaining members 146, 148 are generally cylindrical in shape with the inner retaining member 146 having an outer diameter which is smaller than the inner diameter of outer retaining member 148. Inner retaining member 146 is at least partially inserted within outer retaining member 148. Inner retaining member 146 includes a radially outwardly extending flange 160 at an upper portion thereof. Outer retaining member 148 is provided with radially inwardly extending flanges 162, 164 at an upper and a lower end thereof, respectively. A microcellular polyurethane ring member 168 is disposed between the retaining members 146, 148. Ring member 168 is disposed between the inner wall of outer retaining member 148 and the outer wall of inner retaining member 146.

The body mount 140 includes a fastener bolt 170 received through an opening 172 provided in body 142 and an opening 174 provided in outer retaining member 148. Bolt 170 includes a head portion 176 connected to a shaft portion 178 having a threaded end 180 for receiving a compression plate 182 having an integral nut portion 184. A second microcellular polyurethane member 186 is provided between compression plate 182 and radially inwardly extending flange 164 at the lower end of outer retaining member 148. A third microcellular polyurethane member 188 is disposed between radially inwardly extending flange 162 at the upper end of outer retaining member 148, and the radially outwardly extending flange 160 of inner retaining member 146.

The first microcellular polyurethane ring member 168 is provided for transmitting axial and transaxial forces between frame 144 and body 142. Meanwhile, second and third microcellular polyurethane ring members 186, 188 absorb vibrational and translational forces in the vertical direction.

With respect to each of the above described embodiments, it should be apparent that the inner retaining member could be fastened to either the vehicle frame or the vehicle body while the outer retaining member would be fastened to the other of the vehicle frame or the vehicle body.

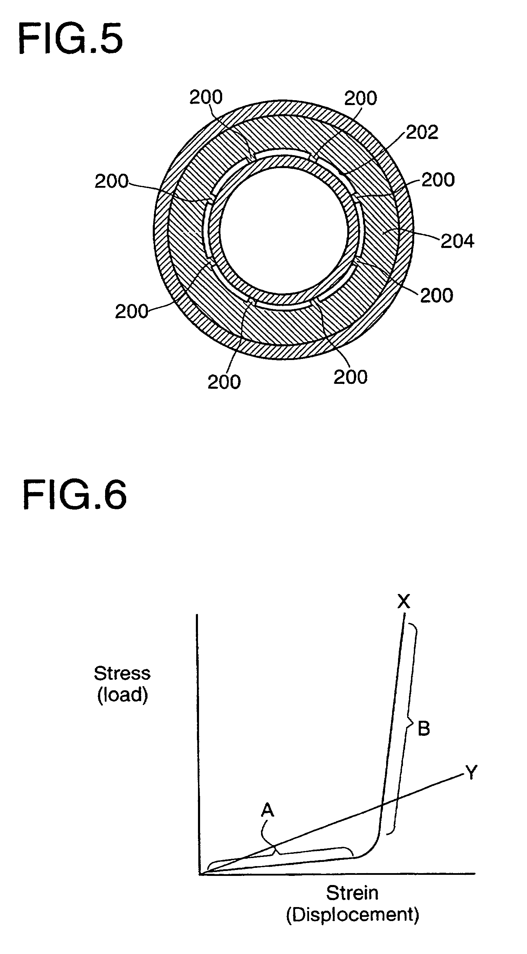

The ring members are preferably made from microcellular polyurethane. Microcellular polyurethane is commercially available from BASF Corporation of Wyandotte, Michigan, under the name ELASTOCELL. Microcellular polyurethane has the desirable characteristic that it does not exhibit large side swell when compressed. The use of microcellular polyurethane provides advantages not obtained with the use of other materials. Microcellular polyurethane is particularly well suited for use radially between two retaining members where both vertical and radial compression forces are exerted on the ring member. For example, the stress versus strain characteristic curve of microcellular polyurethane is non-linear and, therefore, provides a "soft" joint under lower vibrational loads as depicted by region "A" of line X of the characteristic curve shown in Figure 6. Under increased loads, the microcellular polyurethane provides a "stiff" joint as depicted by region "B" of the characteristic curve. In contrast, rubber inherently exhibits a generally linear characteristic curve as shown by line *y* of Figure 6. Accordingly, rubber is not as suitable for providing both a soft joint under low loads and a stiff joint under heavy loads.

The inner and outer retainer members can be made of metal such as steel or aluminum or can be made of plastic such as glass reinforced nylon or propylene. The inner and outer retainer members should have sufficient strength and hardness to withstand the forces exerted between the vehicle body and frame. If plastic materials are used, the weight of the body mount can be minimized and the cost may be reduced.

In order to obtain increased softness in the ring members, the ring members is formed with protruding portions such as inner ribs 200 extending from an inner cylindrical wall 202 of ring member 204, as shown in Figure 5. Inner ribs 200 serve as an initial soft cushion for absorbing low vibrational and translational forces.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A body mount, comprising:
a first generally cylindrical member (i) attached to one of a vehicle body and a vehicle frame;
a second generally cylindrical member (ii) attached to the other of said vehicle body and said vehicle frame; and
a first member (iii) disposed between said first (i) and second (ii) cylindrical members, **characterised in that** said first member (iii) is a microcellular polyurethane member with protruding portions extending from its inner cylindrical wall.

2. The body mount according to claim 1, wherein said second cylindrical member (ii) disposed within said first cylindrical member (i).

3. The body mount according to Claim 2, wherein said second cylindrical (ii) member is attached to said vehicle body.

4. The body mount according to Claim 2, wherein said second cylindrical member (ii) includes a plurality of snap together portions.

5. The body mount according to Claim 2, further comprising a fastener including a bolt having a threaded end for receiving a nut and a compression plate for supporting said first microcellular polyurethane member (iii) between said first (i) and second (ii) generally cylindrical members.

6. The body mount according to Claim 2, wherein said first cylindrical member (i) is attached to said vehicle frame.

7. The body mount according to Claim 2, further comprising a second microcellular polyurethane member (iv) disposed between said vehicle body and said vehicle frame.

8. The body mount according to Claim 7, wherein said first cylindrical member (i) is attached to said vehicle frame, said second cylindrical member (ii) is attached to said vehicle body.

9. The body mount according to Claim 8, wherein said first cylindrical member (i) is welded to said vehicle frame.

10. The body mount according to Claim 8, wherein said first cylindrical member (i) is provided with a plurality of snap-in portions which are received in corresponding openings in said vehicle frame.

11. The body mount according to Claim 2, wherein said first cylindrical member (i) is made from a plastic material.

12. The body mount according to Claim 2, wherein said first cylindrical member (i) is made from metal.

13. The body mount according to Claim 2, wherein said second cylindrical member (ii) is made from a plastic material.

14. The body mount according to Claim 2, wherein said second cylindrical member (ii) is made from metal.

15. The body mount according to Claim 2, wherein said second cylindrical member (ii) includes first and second snap together ring members disposed on upper and lower surfaces of said vehicle frame.

16. A body mount according to claim 1, wherein
said first cylindrical member (i) has a radially extending flange portion;
said first member (iii) is a first microcellular polyurethane ring (iii) disposed radially between said first (i) and second (ii) cylindrical members and longitudinally between said radially extending flange portion and said other of said vehicle body and said vehicle frame.

17. The body mount according to Claim 16, further comprising a bolt extending through an opening in said one of said vehicle body and said vehicle frame, said bolt provided with a nut for supporting a washer thereon which in turn supports a second microcellular polyurethane ring (iv) between said washer and a radially inwardly extending flange portion of said second generally cylindrical member (ii).

18. The body mount according to Claim 16, wherein said first generally cylindrical member (i) is welded to said one of said vehicle body and said vehicle frame.

19. A mount structure, comprising:
a first generally cylindrical member (i) attached to a first member;
a second generally cylindrical member (ii) attached a second member, said second cylindrical member (ii) disposed within said first cylindrical member (i); and **characterised by**
a first microcellular polyurethane member (iii) disposed between said first(i) and second (ii) cylindrical members with protruding portions extending from its inner cylindrical wall.

20. The mount structure according to Claim 19, further comprising a fastener including a bolt having a threaded end for receiving a nut and a compression plate for supporting said first microcellular polyurethane member (iii) between said first (i) and second (ii) generally cylindrical members.

## Patentansprüche

1. Karosserielager, das Folgendes umfasst:
ein erstes allgemein zylindrisches Glied (i), das an einer Fahrzeugkarosserie oder einem Fahrzeugrahmen befestigt ist;
ein zweites allgemein zylindrisches Glied (ii), das an dem jeweils anderen Element, der Fahrzeugkarosserie oder dem Fahrzeugrahmen, befestigt ist; und
ein zwischen dem ersten (i) und dem zweiten (ii) zylindrischen Glied angeordnetes erstes Glied (iii), **dadurch gekennzeichnet, dass** das erste Glied (iii) ein Glied aus mikrozellularem Polyurethan mit sich von seiner zylindrischen Innenwand erstreckenden vorragenden Teilen ist.

2. Karosserielager nach Anspruch 1, bei dem das zweite zylindrische Glied (ii) in dem ersten zylindrischen Glied (i) angeordnet ist.

3. Karosserielager nach Anspruch 2, bei dem das zweite zylindrische Glied (ii) an der Fahrzeugkarosserie befestigt ist.

4. Karösserielager nach Anspruch 2, bei dem das zweite zylindrische Glied (ii) mehrere zusammenschnappbare Teile enthält.

5. Karosserielager nach Anspruch 2, das weiterhin ein Befestigungselement aufweist, das eine Schraube mit einem Gewindeende zur Aufnahme einer Mutter und einer Druckplatte zur Abstützung des ersten Glieds (iii) aus mikrozellularem Polyurethan zwischen dem ersten (i) und dem zweiten (ii) allgemein zylindrischen Glied enthält.

6. Karosserielager nach Anspruch 2, bei dem das erste zylindrische Glied (i) an dem Fahrzeugrahmen befestigt ist.

7. Karosserielager nach Anspruch 2, das weiterhin ein zweites Glied (iv) aus mikrozellularem Polyurethan umfasst, das zwischen der Fahrzeugkarosserie und dem Fahrzeugrahmen angeordnet ist.

8. Karosserielager nach Anspruch 7, bei dem das erste zylindrische Glied (i) am Fahrzeugrahmen und das zweite zylindrische Glied (ii) an der Fahrzeugkarosserie befestigt ist.

9. Karosserielager nach Anspruch 8, bei dem das erste zylindrische Glied (i) mit dem Fahrzeugrahmen verschweißt ist.

10. Karosserielager nach Anspruch 8, bei dem das erste zylindrische Glied (i) mit mehreren Einschnappteilen versehen ist, die in entsprechenden Öffnungen im Fahrzeugrahmen aufgenommen werden.

11. Karosserielager nach Anspruch 2, bei dem das erste zylindrische Glied (i) aus einem Kunststoffmaterial besteht.

12. Karosserielager nach Anspruch 2, bei dem das erste zylindrische Glied (i) aus Metall besteht.

13. Karosserielager nach Anspruch 2, bei dem das zweite zylindrische Glied (ii) aus einem Kunststoffmaterial besteht.

14. Karosserielager nach Anspruch 2, bei dem das zweite zylindrische Glied (ii) aus Metall besteht.

15. Karosserielager nach Anspruch 2, bei dem das zweite zylindrische Glied (ii) ein erstes und ein zweites Ringglied enthält, die zusammenschnappbar sind und an der Ober- und der Unterseite des Fahrzeugrahmens angeordnet sind.

16. Karosserielager nach Anspruch 1, bei dem
das erste zylindrische Glied (1) einen sich radial erstreckenden Flanschteil aufweist;
das erste Glied (iii) ein erster Ring (iii) aus mikrozellularem Polyurethan ist, der radial zwischen dem ersten (i) und dem zweiten (ii) zylindrischen Glied und in Längsrichtung zwischen dem sich radial erstreckenden Flanschteil und dem jeweils anderen Element, der Fahrzeugkarosserie oder dem Fahrzeugrahmen, angeordnet ist.

17. Karosserielager nach Anspruch 16, das weiterhin eine Schraube umfasst, die sich durch eine Öffnung in der Fahrzeugkarosserie oder im Fahrzeugrahmen erstreckt, wobei die Schraube mit einer Mutter zur Abstützung einer Unterlegscheibe darauf versehen ist, die wiederum einen zweiten Ring (iv) aus mikrozellularem Polyurethan zwischen der Unterlegscheibe und einem sich radial nach innen erstreckenden Flanschteil des zweiten allgemein zylindrischen Glieds (ii) abstützt.

18. Karosserielager nach Anspruch 16, bei dem das erste allgemein zylindrische Glied (i) mit der Fahrzeugkarosserie oder dem Fahrzeugrahmen verschweißt ist.

19. Lagerkonstruktion, die Folgendes umfasst:
ein an einem ersten Glied befestigtes erstes allgemein zylindrisches Glied (i);
ein an einem zweiten Glied befestigtes zweites allgemein zylindrisches Glied (ii), wobei das zweite zylindrische Glied (ii) in dem ersten zylindrischen Glied (i) angeordnet ist; **gekennzeichnet durch**
ein zwischen dem ersten (i) und dem zweiten (ii) zylindrischen Glied angeordnetes erstes Glied (iii) aus mikrozellularem Polyurethan mit sich von seiner zylindrischen Innenwand erstreckenden vorragenden Teilen.

20. Lagerkonstruktion nach Anspruch 19, die weiterhin ein Befestigungselement aufweist, das eine Schraube mit einem Gewindeende zur Aufnahme einer Mutter und einer Druckplatte zur Abstützung des ersten Glieds (iii) aus mikrozellularem Polyurethan zwischen dem ersten (i) und dem zweiten (ii) allgemein zylindrischen Glied enthält.

## Revendications

1. Fixation de carrosserie, comprenant :
un premier élément généralement cylindrique (i) fixé à l'un d'une carrosserie de véhicule et d'un châssis de véhicule;
un deuxième élément généralement cylindrique (ii) fixé à l'autre de ladite carrosserie de véhicule et dudit châssis de véhicule; et
un premier élément (iii) disposé entre lesdits premier (i) et deuxième (ii) éléments cylindriques, **caractérisée en ce que** ledit premier élément (iii) est un élément en polyuréthanne microcellulaire doté de portions saillantes s'étendant depuis sa paroi intérieure cylindrique.

2. Fixation de carrosserie selon la revendication 1, dans laquelle ledit deuxième élément cylindrique (ii) est disposé dans ledit premier élément cylindrique (i).

3. Fixation de carrosserie selon la revendication 2, dans laquelle ledit deuxième élément cylindrique (ii) est fixé à ladite carrosserie de véhicule.

4. Fixation de carrosserie selon la revendication 2, dans laquelle ledit deuxième élément cylindrique (ii) comprend une pluralité de portions à encliquetage mutuel.

5. Fixation de carrosserie selon la revendication 2, comprenant en outre un élément de boulonnerie comprenant un boulon possédant une extrémité filetée pour recevoir un écrou et une plaque de compression pour supporter ledit premier élément en polyuréthanne microcellulaire (iii) entre lesdits premier (i) et deuxième (ii) éléments généralement cylindriques.

6. Fixation de carrosserie selon la revendication 2, dans laquelle ledit premier élément cylindrique (i) est fixé audit châssis de véhicule.

7. Fixation de carrosserie selon la revendication 2, comprenant en outre un deuxième élément en polyuréthanne microcellulaire (iv) disposé entre ladite carrosserie de véhicule et ledit châssis de véhicule.

8. Fixation de carrosserie selon la revendication 7, dans laquelle ledit premier élément cylindrique (i) est fixé audit châssis de véhicule, ledit deuxième élément cylindrique (ii) est fixé à ladite carrosserie de véhicule.

9. Fixation de carrosserie selon la revendication 8, dans laquelle ledit premier élément cylindrique (i) est soudé audit châssis de véhicule.

10. Fixation de carrosserie selon la revendication 8, dans laquelle ledit premier élément cylindrique (i) est muni d'une pluralité de portions emboîtables qui sont reçues dans des ouvertures correspondantes dans ledit châssis de véhicule.

11. Fixation de carrosserie selon la revendication 2, dans laquelle ledit premier élément cylindrique (i) est réalisé en matière plastique.

12. Fixation de carrosserie selon la revendication 2, dans laquelle ledit premier élément cylindrique (i) est réalisé en métal.

13. Fixation de carrosserie selon la revendication 2, dans laquelle ledit deuxième élément cylindrique (ii) est réalisé en matière plastique.

14. Fixation de carrosserie selon la revendication 2, dans laquelle ledit deuxième élément cylindrique (ii) est réalisé en métal.

15. Fixation de carrosserie selon la revendication 2, dans laquelle ledit deuxième élément cylindrique (ii) comprend des premier et deuxième éléments annulaires à encliquetage mutuel disposés sur les surfaces supérieure et inférieure dudit châssis de véhicule.

16. Fixation de carrosserie selon la revendication 1, dans laquelle
ledit premier élément cylindrique (i) possède une portion formant bride s'étendant radialement;
ledit premier élément (iii) est un premier anneau en polyuréthanne microcellulaire (iii) disposé radialement entre lesdits premier (i) et deuxième (ii) éléments cylindriques et longitudinalement entre ladite portion formant bride s'étendant radialement et ledit autre de ladite carrosserie de véhicule et dudit châssis de véhicule.

17. Fixation de carrosserie selon la revendication 16, comprenant en outre un boulon s'étendant à travers une ouverture dans ledit un de ladite carrosserie de véhicule et dudit châssis de véhicule, ledit boulon étant muni d'un écrou pour supporter sur lui une rondelle qui supporte à son tour un deuxième anneau en polyuréthanne microcellulaire (iv) entre ladite rondelle et une portion formant bride s'étendant radialement vers l'intérieur dudit deuxième élément généralement cylindrique (ii).

18. Fixation de carrosserie selon la revendication 16, dans laquelle ledit premier élément généralement cylindrique (i) est soudé audit un de ladite carrosserie de véhicule et dudit châssis de véhicule.

19. Structure de fixation, comprenant :
un premier élément généralement cylindrique (i) fixé à un premier élément;
un deuxième élément généralement cylindrique (ii) fixé à un deuxième élément, ledit deuxième élément cylindrique (ii) étant disposé dans ledit premier élément cylindrique (i); et **caractérisée par**
un premier élément en polyuréthanne microcellulaire (iii) disposé entre lesdits premier (i) et deuxième (ii) éléments cylindriques avec des portions saillantes s'étendant depuis sa paroi intérieure cylindrique.

20. Structure de fixation selon la revendication 19, comprenant en outre un élément de boulonnerie comprenant un boulon possédant une extrémité filetée pour recevoir un écrou et une plaque de compression pour supporter ledit premier élément en polyuréthanne microcellulaire (iii) entre lesdits premier (i) et deuxième (ii) éléments généralement cylindriques.
